# EUROPEAN PATENT SPECIFICATION

(11) **EP 1 136 449 B1**
(45) Date of publication and mention of the grant of the patent: **11.06.2003**
(21) Application number: 01302381.7
(22) Date of filing: 14.03.2001
(51) Int. Cl.: C02F 9/00, B02C 18/42

(54) **Waste water processing system**
Abwasserbehandlungssystem
Système de traitement d'eaux usées

(30) Priority: 21.03.2000 JP 2000078151
(43) Date of publication of application: 26.09.2001
(73) Proprietor: SANYO ELECTRIC Co., Ltd., Moriguchi-shi, Osaka 570 (JP)
(72) Inventor: Fujimoto, Keiichi, Kato-gun, Hyogo-ken (JP); Tanimoto, Yoshihiro, Kanzaki-gun, Hyogo-ken (JP); Tamura, Toshihiro, Moriyama-shi, Shiga-ken (JP); Yoneda, Isao, Himeji-shi, Hyogo-ken (JP); Akamatsu, Kozo, Kanzaki-gun, Hyogo-ken (JP); Takami, Hiroyuki, Kasai-shi, Hyogo-ken (JP)
(74) Representative: Pacitti, Paolo

(56) References cited:
- PATENT ABSTRACTS OF JAPAN vol. 2000, no. 05, 14 September 2000 (2000-09-14) & JP 2000 033363 A (SANYO ELECTRIC CO LTD), 2 February 2000 (2000-02-02)
- PATENT ABSTRACTS OF JAPAN vol. 1999, no. 14, 22 December 1999 (1999-12-22) & JP 11 244837 A (MATSUSHITA ELECTRIC WORKS LTD), 14 September 1999 (1999-09-14)
- PATENT ABSTRACTS OF JAPAN vol. 1999, no. 09, 30 July 1999 (1999-07-30) & JP 11 104601 A (SANYO ELECTRIC CO LTD), 20 April 1999 (1999-04-20)
- PATENT ABSTRACTS OF JAPAN vol. 013, no. 501 (C-652), 10 November 1989 (1989-11-10) & JP 01 199687 A (HITACHI LTD;OTHERS: 01), 11 August 1989 (1989-08-11)

## Description

### FIELD OF THE INVENTION

The invention relates to a waste water processing system, and in particular to a system for processing waste water containing crushed garbage discharged from a disposer (referred to as disposer waste water).

### BACKGROUND OF THE INVENTION

Some of waste water processing systems put in practice are full bore systems which are designed to process both waste water discharged from the sink using and not using a disposer.

Japanese Patent Laid Open Publication No. 10-323657 (B09B 5/00) discloses another type of waste water processing system having a shutoff valve which is opened to intake the waste water from a disposer only when the disposer is in use but is closed otherwise.

Unfortunately, those full bore systems as mentioned above have a drawback in that they are as large in size as their septic tanks and require a large construction to bury them in the ground, so that it is difficult to provide them as convenient installations for existing housings.

A waste water processing system that utilizes a shutoff valve which opens only when the disposer is in use has a further drawback that it discharges much waste water without processing it in occasions where the disposer is not used. Such waste water is filthier than the waste water discharged from a waste water processing system treating the waste water discharged from a disposer. As a result, such system poses a problem of polluting natural environment if the waste water is discharged directly to the rivers and other water resources. On the other hand, if the system is designed to collect the entire waste water for treatment, it would require a huge sewage work, so that it would not be marketable as a merchandise.

It is therefore an object of the invention to provide a full bore waste water processing system which is small in size and yet capable of processing waste water in a stable manner.

### SUMMARY OF THE INVENTION

In one aspect of the invention, a waste water processing system for processing kitchen waste water includes: a disposer; a waste water processing section for processing the waste water discharged from the disposer; a regulation tank for pooling the kitchen waste water (hereinafter referred to as kitchen waste water regulation tank) discharged while the disposer is not used; a channel switcher which is adapted to channel the waste water discharged from the disposer to the waste water processing section when the disposer is in use and to channel the kitchen waste water to the kitchen waste water regulation tank when the disposer is not in use; transfer means for transferring the waste water accumulated in the kitchen waste water regulation tank to the waste water processing section at a constant rate; control means for controlling the disposer, the waste water processing section, the kitchen waste water regulation tank, the channel switcher, and the transfer means; and a passage for draining the overflowing waste water to the waste water processing section.

The waste water processing section may comprise: a crushed garbage flow regulation tank for pooling the waste water which contains crushed garbage generated in the disposer; a solid-liquid separator for separating a solid-liquid mixture pooled in the crushed garbage flow regulation tank into solid components and liquid components; and a processing tank for processing the liquid components led from the solid-liquid separator, wherein the kitchen waste water regulation tank is adapted to discharge its waste water to the processing tank.

The processing tank may comprise: an aeration tank for processing the liquid components led from the solid-liquid separator; a precipitation tank for precipitating sludge contained in the water discharged from the aeration tank; and means for returning the sludge separated in the precipitation tank back to a crushed garbage flow regulation tank, wherein the kitchen waste water regulation tank is adapted to drain its water to the aeration tank.

The kitchen waste water regulation tank is provided with a water level sensor adapted to detect the water level in the tank before the waste water overflows from the tank.

In the waste water processing section, the precipitation tank receives a gravity flow of the processed waste water from the aeration tank and discharges its supernatant by gravity to a sewage system. The precipitation tank is adapted to admit a coagulant agent deposited from a coagulant agent supply and has a stirring means for stirring the supernatant, and the control means is adapted to stop the stirring means when it senses the kitchen waste water overflowing from the kitchen waste water regulation tank.

The control means is adapted to issue an alarm and limit the use of water in the kitchen sink when the water level sensor senses the overflow of the waste water from the kitchen waste water regulation tank.

The water supply pipe connected to the faucet of the kitchen may be provided with a valve which is controlled by the water level sensor for limiting the flow of water through it when the sensor senses the water level reaching the overflow level in the kitchen waste water regulation tank.

The overflow outlet of the kitchen waste water regulation tank has a sufficient cross section to permit the maximum flow of waste water drained from the sink.

The control means is adapted to increase the flow of the waste water from the kitchen waste water regulation tank to the waste water processing section when the water level sensor senses the water level approaching the overflow level in the kitchen waste water regulation tank.

The waste water in the kitchen waste water regulation tank may be transported to the aeration tank by an airlift pump, while the sludge separated in the precipitation tank may be returned therefrom to the crushed garbage flow regulation tank through a sludge return pipe. In this pipe arrangement, the airlift pipe of the airlift pump preferably passes under the sludge return pipe when crossing the sludge return pipe.

The aeration tank may be provided with an air diffuser for generating a streaming of the water in the tank and a baffle for stabilizing the streaming.

A partition board may be provided in the aeration tank and between the overflow inlet for receiving waste water from the kitchen waste water regulation tank and the overflow outlet to the precipitation tank such that the waste water can pass under the partition board.

### BRIEF DESCRIPTION OF THE DRAWINGS

The invention will now be described by way of example with reference to the accompanying drawings, in which:
Fig. 1 is a block diagram of a waste water processing system embodying the invention;
Fig. 2 shows an arrangement of various tanks of the system shown in Fig. 1, with a top view shown in Fig. 2A and a side cross section shown in Fig. 2B;
Fig. 3 is a schematic view of a kitchen waste water regulation tank for use in the system shown in Fig. 1;
Fig. 4 is a schematic view of an aeration tank, with a perspective view taken from above (Fig. 4A), and a side elevational view showing flows of water caused by aeration in the tank (Fig. 4B).

### DETAILED DESCRIPTION OF THE PREFERRED EMBODIMENT

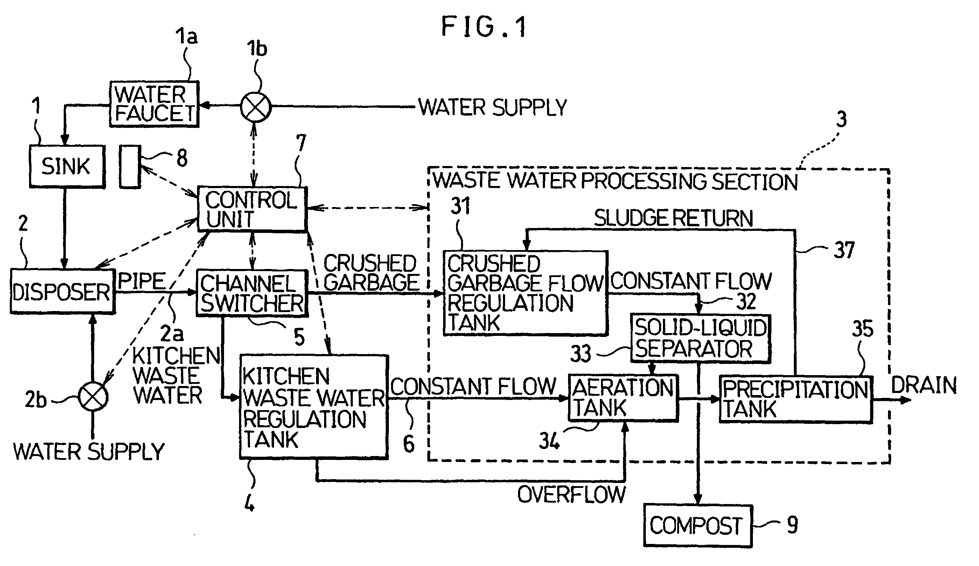

Fig. 1 is a block diagram representation of a waste water processing system according to the invention, which includes such major components as: a disposer 2 connected to a sink 1 of a kitchen; a waste water processing section 3 for processing the waste water discharged from the disposer 2; a regulation tank 4 for pooling the kitchen waste water (kitchen waste water regulation tank) when the disposer is not in use; a channel switcher 5 which is adapted to channel the waste water discharged from the disposer 2 to the waste water processing section 3 when the disposer 2 is in use and to channel the kitchen waste water to the kitchen waste water regulation tank 4 when the disposer 2 is not in use; an airlift pump 6 for pumping the waste water accumulated in the kitchen waste water regulation tank 4 to the waste water processing section 3 at a constant rate; and a control unit 7 having a microcomputer for controlling the operation of the entire waste water processing system.

In general, a water supply channel (water pipe) connected to a faucet 1a of the sink 1 has a feed valve 1b, and a water supply pipe for the disposer 2 has an automatic feed valve 2b. In the invention, operation of the feed valve 1b for the faucet 1a is governed by the control unit 7. Provided in the neighborhood of the sink 1 is a control panel 8 connected with the control unit 7 for use by an operator to control the system and make necessary confirmation thereof.

The waste water processing section 3 includes: a crushed garbage flow regulation tank 31 for receiving therein the waste water containing crushed garbage discharged from the disposer 2 via the channel switcher 5; a solid-liquid separator 33 to which a mixture of solids and liquids accumulated in the bottom section of the crushed garbage flow regulation tank 31 is pumped by an airlift pump 32 at a constant rate for separation of the mixture into solid and liquid components; an aeration tank (for processing facilitated by aerophillic microorganism) 34 for aerating the separated liquid components received from the solid-liquid separator 33; a precipitation tank 35 for precipitating the sludge contained in the water received from the aeration tank 34.

The waste water pumped by the pump 6 from the kitchen waste water regulation tank 4, and the waste water overflowing out of the overflow outlet 4a (described later of the kitchen waste water regulation tank 4) are discharged into the aeration tank 34. The system is arranged such that the sludge separated in the precipitation tank 35 is returned to the crushed garbage flow regulation tank 31 by an airlift pump 37. The solid components separated in the solid-liquid separator 33 is discharged in a compost 9.

Incidentally, an airlift pump is a type of pump which comprises an airlift pipe inserted in the water to be pumped and a blower pump for blowing air into the airlift pipe so that the water and the sediment in the water as well are lifted by the bubbling air in the pipe.

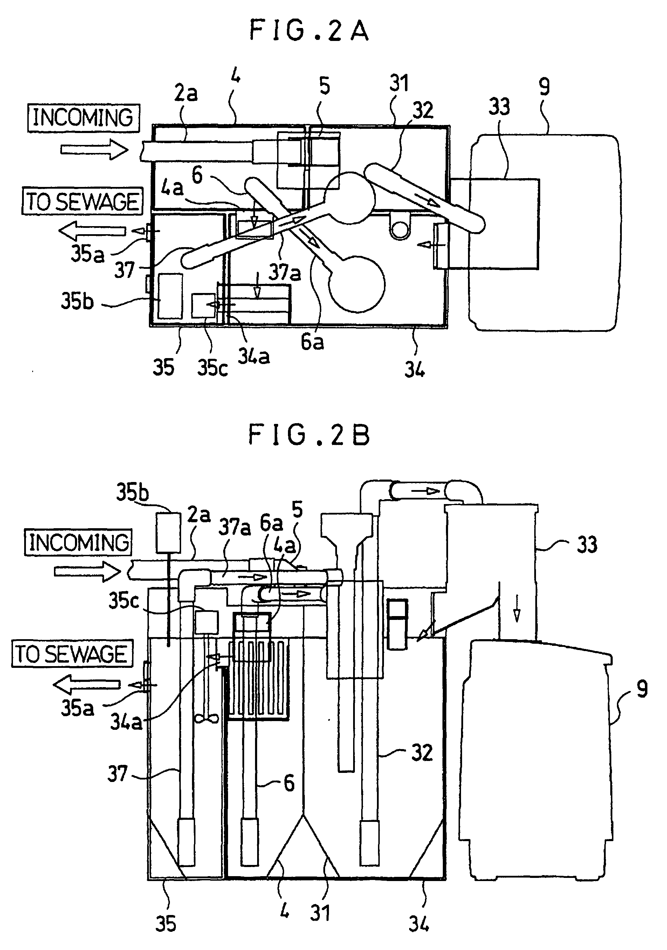

Fig. 2 shows, in a top view (Fig. 2A), and, in a side cross sectional view (Fig. 2B), a piping arrangement of the waste water system designed for outdoor installation, connectable to the disposer 2 via a conduit 2a.

As seen in Fig. 2A, the kitchen waste water regulation tank 4 and the adjacent crushed garbage flow regulation tank 31 are separated by a wall, across which is the channel switcher 5 for channeling the waste water arriving from the kitchen to the kitchen waste water regulation tank 4 or to the crushed garbage flow regulation tank 31, depending on whether the waste water contains crushed garbage or not. This arrangement permits two different channels for the waste water without any other pipes.

Each of the kitchen waste water regulation tank 4 and the crushed garbage flow regulation tank 31 is provided with a water level sensor (not shown) in the form of a float or an electrostatic capacitor for example. Signals indicative of the water levels sensed by these sensors are supplied to the control unit 7, which permits operation of the disposer 2 if the water level is lower than the predetermined level, but prohibits the operation if the detected water level is higher than the predetermined level. At the same time, the control panel 8 displays a sign to the user, indicating whether the disposer 2 is currently operable or not by the user. The airlift pump 6 is provided in the kitchen waste water regulation tank 4 to pump deep water in the kitchen. waste water regulation tank 4, which is rich in organic compounds, into the aeration tank 34. The airlift pump 32 is provided in the crushed garbage flow regulation tank 31 to pump precipitate accumulated on the bottom section of the crushed garbage flow regulation tank 31 into the solid-liquid separator 33. It is noted that the amount of fluid transported by each of these airlift pumps 6 and 32 per unit time interval depends on the water level in the tank, as described above. However, it is possible to transport a substantially constant volume of waste water at all water levels by controlling the operational period of the airlift pump 6 or the airlift pump 32 by the control unit 7 based on the water level detected by the water level sensors.

Arranged adjacent to and in parallel with the crushed garbage flow regulation tank 31 is the aeration tank 34. Adjacent to the aeration tank 34 is the compost 9. The solid-liquid separator 33 is disposed above the compost 9. By installing these components in the manner as described above, the airlift pump 32 for transporting the solid-liquid mixture from the crushed garbage flow regulation tank 31 to the solid-liquid separator 33 can be made shorter, thereby preventing clogging of the pipes. The solid components may be dropped into the compost 9, and the liquid components may be sent to the aeration tank 34 without using a further pipe.

One end of the aeration tank 34, remote from the compost 9, extends beyond the mid section of the kitchen waste water regulation tank 4 and to the precipitation tank 35, as shown in Fig. 2. Formed on the upper section of the side wall of the kitchen waste water regulation tank 4, and adjacent to the aeration tank 34, is an overflow outlet 4a having a predetermined cross section as described later. In order to allow the aerated waste water in the aeration tank 34 to overflow into the precipitation tank 35 by gravity, an overflow outlet 34a is provided across the neighboring walls of the aeration tank 34 and the precipitation tank 35. In addition, an drain outlet 35a is formed in the remote wall of the precipitation tank 35. The precipitation tank 35 is provided with a coagulant supply 35b for supplying a coagulant to the precipitation tank 35 to promote precipitation of sludge therein, along with a stirrer 35c for mixing the deposited coagulant with the waste water in the precipitation tank 35.

Because of the arrangement of the tanks 4, 31, 34, and 35 in the manner as described above, the airlift pipe 6a extending from the kitchen waste water regulation tank 4 to the aeration tank 34 and the airlift pipe 37a extending from the precipitation tank 35 to the crushed garbage flow regulation tank 31 crosses each other as shown in Fig. 2A. In the example shown herein, the airlift pipe 6a passes under the airlift pipe 37a.

In the waste water system thus arranged as described above, the waste water containing crushed garbage discharged from the disposer 2 and ordinary kitchen waste water coming directly from the sink are both passed through the pipe 2a, but they are distributed into the crushed garbage flow regulation tank 31 and the kitchen waste water regulation tank 4, respectively, after the water channel is switched by the channel switcher 5.

When a disposer switch provided on the control panel 8 is switched on by a user, the channel switcher 5 is switched so as to channel the waste water to the crushed garbage flow regulation tank 31 and then the disposer 2 is activated. The disposer 2, in the example shown herein, is a batch type disposer, which is designed to be first charged with garbage, covered with a safety cap, fed with water by means of an automated water supply valve 2b, and then started. The valve 2b can be an electromagnetic valve.

After the crushing of garbage by the disposer 2 is finished, water is supplied thereto for the purpose of cleaning the pipe 2a connected to the disposer 2. Subsequently, the channel switcher 5 is switched for channeling the waste water to the kitchen waste water regulation tank 4.

The waste water containing crushed garbage discharged from the disposer 2 is stored in the crushed garbage flow regulation tank 31, from where the water is transported at a constant rate and at a regular time interval to the solid-liquid separator 33 by the airlift pump 32. Solid components separated by the solid-liquid separator 33 is deposited to the compost 9, where it is composted to produce a manure.

On the other hand, separated liquid components are led to the aeration tank 34, where the liquid components are aerated and decomposed by aerophillic microorganisms, thereby decreasing organic contents in the liquid components. The sludge, contained in the waste water overflowing from the overflow outlet 34a into the precipitation tank 35, partly precipitates in the precipitation tank 35. Only the supernatant is discharged from the precipitation tank 35 to an external facility such as a sewage. The sludge precipitated in the precipitation tank 35 is returned therefrom to the crushed garbage flow regulation tank 31 by the airlift pump 37. The sludge returned from the precipitation tank 35 is mixed with a fresh waste water from the disposer 2, and collected in the solid-liquid separator 33 together with other solid components.

While the disposer 2 is not used, ordinary waste water from the kitchen is lead to the kitchen waste water regulation tank 4 through the water channel selected by the channel switcher 5. As a predetermined amount of waste water has been admitted in the kitchen waste water regulation tank 4, the waste water in the tank 4 is transported therefrom to the aeration tank 34 by the airlift pump 6 at a constant rate and at a predetermined regular interval.

This repeated constant-rate pumping of the waste water from the kitchen waste water regulation tank 4 permits minimization of the volume of the kitchen waste water regulation tank 4, which is otherwise required to have a large capacity to accept the kitchen waste water. By the minimization of the kitchen waste water regulation tank 4 which normally requires the largest volume in the system, the system can be constructed in a sufficiently compact form that it is not necessary to bury it in the ground and can be installed on a small ground area.

Should the amount of waste water flowing from the kitchen into the kitchen waste water regulation tank 4 exceed the amount of the waste water removed from the tank 4 by regular, intermittent, constant-rate pumping from the tank 4, the waste water may safely overflows into the aeration tank 34 through the overflow outlet 4a formed in the upper section of the wall of the kitchen waste water regulation tank 4. Thus, undesirable consequences caused by the direct discharge of the overflowing waste water from the kitchen waste water regulation tank 4 into an external system such as the sewage can be avoided.

It will be understood that in the arrangement of the tanks 4, 31, 34, and 35 as shown in Fig. 2 the overflow can be dealt with by the overflow outlet 4a alone as described above. However, if the overflow outlet 4a is provided away from the aeration tank 34, a conduit may be provided to lead the overflowing water from the overflow outlet 4a to the aeration tank 34. Naturally, the water level in the aeration tank 34 is normally maintained below the overflow outlet 4a. The waste water is transported by a gravity flow.

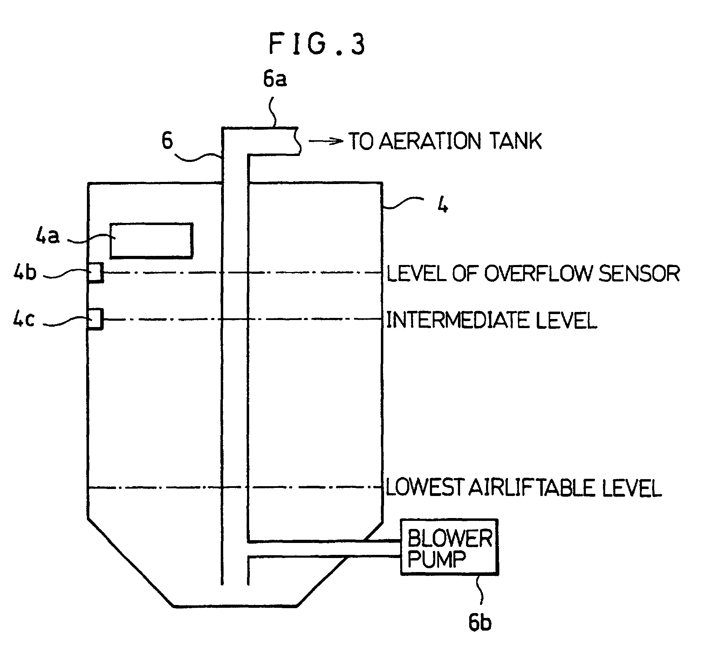

As previously noted, the kitchen waste water regulation tank 4 is provided with a water level sensor (not shown), which can be of a float type or electrostatic capacitor type adapted to generate a signal indicative of the water level to control the airlift time of the airlift pump 6 (which is the time for the blower pump 6b being energized, as shown in Fig. 3) for carrying out the constant-rate pumping of the waste water based on the water level. It will be understood from Fig. 3 that by setting the overflow sensor 4b at a level (referred to as overflow level) sufficiently below the overflow outlet 4a, the overflowing may be detected well in advance of the actual overflow, so that problematic discharges of sludge flowing from the precipitation tank 35 for example caused by an overflow can be avoided, and stable processing conditions can be maintained.

Specifically, when the water level is detected exceeding the above mentioned overflow level, stirring by the stirrer 35c in the precipitation tank 35 is stopped. Under normal operating conditions, the stirrer 35c is activated in synchronism with each periodic deposition of the coagulant. However, if an overflow occurs, it is stopped to prevent possible overflow of the sludge flowing from the precipitation tank 35. Such overflow of the sludge can be further prevented by turning on a warning lamp on the control panel 8 and/or issuing an alarm to the user, and by controlling the water supply valve 1b connected to the faucet 1a to limit the supply of water to the sink 1.

The cross sectional area of the overflow outlet 4a is determined so as to allow for the maximum permissible flow from the sink 1. The maximum flow through the faucet 1a normally ranges from 20 to 30 L/min. However, when the sink 1 connected to the disposer 2 and filled with water is flushed, the maximum flow will reach 60 L/min. In order to allow for this much of the flushed water, the cross sectional area of the overflow outlet 4a is preferably not less than 80mm × 36mm, based on the formula for a standard rectangular weir. This cross sectional area will prevent the overflow of the kitchen waste water from the kitchen waste water regulation tank 4 if it is fully charged with the waste water. Similarly, the overflow outlet 34a of the aeration tank 34 communicating with the precipitation tank 35, and the outlet 35a of the precipitation tank 35 communicating with the sewage, preferably have sufficiently large cross sectional areas.

The kitchen waste water regulation tank 4 is provided with an additional water level sensor 4c for detecting an "intermediate" water level between the overflow level and the lowest permissible level for the airlift pumping, as shown in Fig. 3. When the water level reaches this "intermediate" level, the airlift pump 6 (i.e. blower pump 6b) is operated for a longer period of time than a predetermined period for ordinary pumping, to thereby increase the amount of the water to be pumped from the kitchen waste water regulation tank 4 to the aeration tank 34. In this arrangement, stable operation of the waste water processing system is attained if an excessive amount of waste water has flown from the kitchen into the tank 4, since a greater amount of the waste water is removed by the airlift pump before an overflow takes place in the tank 4.

Although the water level sensors 4b and 4c are presumably provided in the foregoing example to prevent the overflows from the kitchen waste water regulation tank 4, they are not necessary if use is made of the floating type or electrostatic capacitor type water level sensor already provided in the kitchen waste water regulation tank 4 as means for carrying out constant-rate intermittent pumping of the waste water by the airlift pump 6. Omission of the sensors 4b and 4c will contribute to saving of cost of the system.

It is noted that, in the tank arrangement as shown in Fig. 2, the relative positions of the airlift pipe 6a extending from the kitchen waste water regulation tank 4 to the aeration tank 34 and of the airlift pipe 37a extending from the precipitation tank 35 to the crushed garbage flow regulation tank 31 are such that the former airlift pipe 6a passes under the latter airlift pipe 37a. By lowering the former airlift pipe below the latter in this manner, the airliftable water level for the pump in the kitchen waste water regulation tank 4 is lowered and the effective volume of the waste water that can be pumped out by the airlift pump is increased accordingly, so that the effective volume that can be processed by the constant-rate regular airlifting is increased, thereby enabling more stable and more enhanced pumping operation of the system. It is noted that under normal operating conditions the precipitation tank 35 is substantially filled with waste water, so that the airlift pipe 37a extending from the precipitation tank 35 to the crushed garbage flow regulation tank 31 works well at a higher position than the airlift pipe 6a.

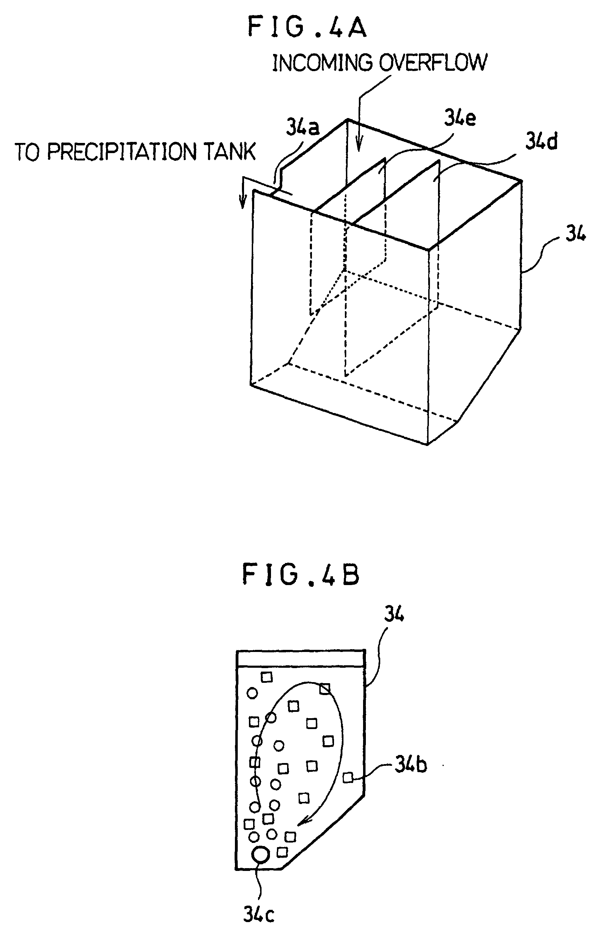

Incidentally, there is provided carriers 34b in the aeration tank 34 as shown in Fig. 4B for the purpose of accommodating thereon aerophillic micro-organism. The carriers are put in circulatory motions by the aerating air supplied from an air diffusion pipe 34c provided at bottom of the aeration tank 34, as shown in the figure. In order to stabilize the circulatory motions, a baffle 34d may be provided in the aeration tank 34 in such a way that the water can pass under the baffle. Although there is only one baffle 34a shown in Fig. 4A, more than one baffle can be provided depending on the configuration and the dimensions of the aeration tank 34.

A partition board 34e having a similar structure as the baffle 34d can be also provided in the aeration tank 34 and upstream of the overflow inlet of the kitchen waste water regulation tank 4, so that the partition board 34e will prevent the micro-organism carried on the carriers from being washed away from the aeration tank 34 in an event that a great amount of the kitchen waste water runs into the tank.

In summary, the invention provides a waste water processing system having: a disposer; a waste water processing section for processing the waste water discharged from the disposer; a kitchen waste water regulation tank for pooling the kitchen waste water discharged while the disposer is not used; a channel switcher adapted to channel the waste water discharged from the disposer to the waste water processing section when the disposer is in use and to channel the kitchen waste water to the kitchen waste water regulation tank when the disposer is not in use; transfer means for transferring the waste water accumulated in the kitchen waste water regulation tank to the waste water processing section at a constant rate; control means for controlling the disposer, the waste water processing section, the kitchen waste water regulation tank, the channel switcher, and the transfer means; and a passage for draining the overflowing waste water to the waste water processing section. The system of the invention is capable of performing regular constant-rate pumping of the waste water from the kitchen waste water regulation tank, thereby enabling minimization of the volume of the tank. The system is also capable of draining the overflowing waste water from the tank to the waste water processing section, preventing the overflowing waste water from drained to the sewage. The system can be implemented in a compact form, yet it can perform desired waste water processing in a stable manner.

The waste water processing section comprises: a crushed garbage flow regulation tank for pooling the waste water which contains crushed garbage generated in the disposer; a solid-liquid separator for separating a solid-liquid mixture pooled in the crushed garbage flow regulation tank into solid components and liquid components; and a processing tank for processing the liquid components led from the solid-liquid separator, wherein the kitchen waste water regulation tank is adapted to discharge its waste water to the processing tank, so that the waste water processing system can process both kitchen waste water not containing garbage and the waste water containing garbage equally well.

The processing tank may comprise: an aeration tank for processing the liquid components led from the solid-liquid separator; a precipitation tank for precipitating sludge contained in the water discharged from the aeration tank; and means for returning the sludge separated in the precipitation tank back to a crushed garbage flow regulation tank, wherein the kitchen waste water regulation tank is adapted to drain its water to the aeration tank. As a result, the plain kitchen waste water and the liquid components of the disposer waste water can be processed in the same aeration tank. The sludge, contained in the processed water and precipitating in the precipitation tank, is advantageously returned to the crushed garbage flow regulation tank for further processing.

Since the kitchen waste water regulation tank is provided with a water level sensor adapted to detect the water level before the waste water overflows from the tank, problems caused by such overflow can be minimized and stable operation of the processing system can be maintained.

Particularly, when the water level is detected exceeding the above mentioned overflow level, stirring by the stirrer 35c in the precipitation tank 35 is stopped to prevent discharge of the sludge into an external facility such as a sewage.

Upon detection of the overflow level of the kitchen waste water regulation tank by the water level sensor, a warning may be issued to the current user so that he would suppress the amount of the waste water discharged from the sink to prevent the overflow.

With the valve provided in the water supply pipe connected to the faucet of the kitchen, the overflow of the kitchen waste water regulation tank can be prevented by controlling the valve to limit the supply of water to the sink when the sensor senses the water level approaching the overflow level in the kitchen waste water regulation tank.

Since the cross sectional area of the overflow outlet may be chosen sufficiently large to allow for the maximum flow of the kitchen waste water from the sink, undesirable overflow of the waste water to an external environment can be avoided if the kitchen waste water flow fill the kitchen waste water regulation tank.

Since the amount of the water transported from the kitchen waste water regulation tank to the waste water processing section can be increased when the high water level is detected by the water level sensor, the capacity of the tank to prevent the overflow is substantially increased, enabling stable processing of the waste water by the system even when the kitchen waste water temporarily exceeds the nominal amount of processing.

Since in the arrangement where the waste water in the kitchen waste water regulation tank is transported to the aeration tank by an airlift pump while the sludge separated in the precipitation tank is returned therefrom to the crushed garbage flow regulation tank through a sludge return pipe, the airlift pipe of the airlift pump preferably passes under the sludge return pipe when crossing the sludge return pipe, the airliftable water level for the pump in the kitchen waste water regulation tank is lowered and the effective volume of the waste water that can be pumped out by the regular constant-rate operation of the airlift pump is increased accordingly, thereby enabling more stable and more enhanced operation of the system.

Aeration of the waste water in the aeration tank can be promoted further if the aeration tank is provided with an air diffuser for generating a streaming of the water in the tank and a baffle for stabilizing the streaming.

By the provision of a partition board in the aeration tank and between the overflow inlet connected with the kitchen waste water regulation tank and the overflow outlet connected with the precipitation tank in such a way that the waste water can pass under the partition board, a loss of micro-organism from the aeration tank due to an overflow of the waste water from the aeration tank can be avoided in an event that great amount of the kitchen waste water runs down into the tank.

## Claims

1. A waste water processing system for processing kitchen waste water comprising:
a disposer; (2)
a waste water processing section (3) for processing the waste water discharged from said disposer;
a regulation tank (4) for pooling said kitchen waste water (hereinafter referred to as kitchen waste water regulation tank) discharged while said disposer is not used;
a channel switcher (5) which is adapted to channel the waste water discharged from said disposer to said waste water processing section when said disposer is in use and to channel the kitchen waste water to said kitchen waste water regulation tank when said disposer is not in use;
transfer means (6) for transferring the waste water accumulated in said kitchen waste water regulation tank to said waste water processing section at a constant rate;
control means (7) for controlling said disposer, said waste water processing section, said kitchen waste water regulation tank, said channel switcher, and said transfer means; and
a passage for draining the waste water overflowing from said kitchen waste water regulation tank to said waste water processing section.

2. The waste water processing system according to claim 1, wherein said waste water processing section comprises:
a crushed garbage flow regulation tank (31) for pooling the waste water which contains crushed garbage generated in said disposer;
a solid-liquid separator (33) for separating a solid-liquid mixture pooled in said crushed garbage flow regulation tank into solid components and liquid components; and
a processing tank for processing said liquid components led from said solid-liquid separator, wherein
said kitchen waste water regulation tank is adapted to discharge its waste water to said processing tank.

3. The waste water processing system according to claim 2, wherein said processing tank comprises:
an aeration tank (34) for processing said liquid components led from said solid-liquid separator;
a precipitation tank (35) for precipitating sludge contained in said water discharged from said aeration tank; and
means for returning the sludge (37) separated in said precipitation tank back to said crushed garbage flow regulation tank, wherein
said kitchen waste water regulation tank is adapted to drain its waste water to said aeration tank.

4. The waste water processing system according to any one of claims 1 through 3, wherein said kitchen waste water regulation tank is provided with a water level sensor (4b,4c) adapted to detect the water level in said tank before the waste water overflows from said tank.

5. The waste water processing system according to claim 4, wherein said precipitation tank is adapted to receive a gravity flow of the processed waste water from said aeration tank (34) and to discharge its supernatant by gravity to a sewage system, said precipitation tank adapted to admit a coagulant agent deposited from a coagulant agent supply and having a stirring means (35c) for stirring said supernatant, and discharging its supernatant by gravity, and wherein said control means is adapted to stop said stirring means upon sensing the kitchen waste water overflowing from said kitchen waste water regulation tank.

6. The waste water processing system according to claim 4 or 5, wherein said control means is adapted to issue an alarm and to limit the use of water in the kitchen sink when said water level sensor senses the overflow of the waste water from said kitchen waste water regulation tank.

7. The waste water processing system according to any one of claims 4 through 6, further comprising a valve provided in a water supply pipe connected to the kitchen faucet, said valve controlled by said water level sensor to limit the flow of water through said faucet when said sensor senses the overflow level in said kitchen waste water regulation tank.

8. The waste water processing system according to any one of claims 4 through 7, wherein the overflow outlet of said kitchen waste water regulation tank has a sufficient cross section to permit the maximum flow of waste water drained from the sink.

9. The waste water processing system according to any one of claims 4 through 8, wherein said control means is adapted to increase the flow of waste water from said kitchen waste water regulation tank to said waste water processing section when said water level sensor senses the water level in said kitchen waste water regulation tank approaching said overflow level.

10. The waste water processing system according to any one of claims 3 through 9, wherein an airlift pump (6a) is provided by means of which the waste water in said kitchen waste water regulation tank is transported to said aeration tank while the sludge separated in said precipitation tank is returned therefrom to the crushed garbage flow regulation tank through a sludge return pipe, and wherein the airlift pipe of said airlift pump passes under said sludge return pipe (37) when crossing said sludge return pipe.

11. The waste water processing system according to any one of claims 3 through 10, wherein said aeration tank is provided with an air diffuser (34c) for generating a streaming of the water in said tank and a baffle.

12. The waste water processing system according to any one claims 3 through 11, further comprising a partition board (34e) in said aeration tank and between the overflow inlet for receiving waste water from said kitchen waste water regulation tank and the overflow outlet to said precipitation tank such that the waste water can pass under said partition board.

## Patentansprüche

1. Ein Abwasseraufbereitungssystem zur Aufbereitung von Küchenabwasser, bestehend aus:
einer Vernichtungsvorrichtung (2);
einem Abwasseraufbereitungsabschnitt (3) zur Aufbereitung des Abwassers, das von der Vernichtungsvorrichtung ausgelassen wird;
einem Ausgleichstank (4) zum Sammeln des Küchenabwassers (anschließend als Küchenabwasserausgleichstank bezeichnet), das, während die Vernichtungsvorichtung nicht verwendet wird, ausgelassen wird;
einem Kanalumschalter (5), der angepasst ist, um das Abwasser, das von der Vernichtungsvorrichtung ausgelassen wird, zum Abwasseraufbereitungsabschnitt zu lenken, wenn die Vernichtungsvorrichtung in Gebrauch ist, und um das Küchenabwasser zum Küchenabwasserausgleichstank zu lenken, wenn die Vernichtungsvorrichtung nicht in Gebrauch ist;
einem Weiterleitungsmittel (6) zum Weiterleiten des Abwassers, das sich im Küchenabwasserausgleichstank angesammelt hat, bei einer konstanten Geschwindigkeit zum Abwasseraufbereitungsabschnitt;
einem Steuermittel (7) zum Steuern der Vernichtungsvorrichtung des Abwasseraufbereitungsabschnitts, des Küchenabwasserausgleichstanks, des Kanalumschalters und des Weiterleitungsmittels; und
einem Durchlass zum Ablassen des vom Küchenabwasserausgleichstank zum Abwasseraufbereitungsabschnitt überlaufenden Wassers.

2. Abwasseraufbereitungssystem gemäß Anspruch 1, wobei der Abwasseraufbereitungsabschnitt aus Folgendem besteht:
einem Ausgleichstank (31) für zerkleinerten Müllfluss zum Sammeln des Abwassers, das in der Vernichtungsvorrichtung erzeugten zerkleinerten Müll enthält;
einem fest-flüssigen Abscheider (33) zum Trennen einer fest-flüssigen Mischung, die im Ausgleichstank für zerkleinerten Müllfluss gesammelt wird, in feste Bestandteile und flüssige Bestandteile; und
einem Aufbereitungstank zur Aufbereitung der flüssigen Bestandteile, die vom fest-flüssigen Abscheider weggeleitet werden, wobei
der Küchenabwasserausgleichstank angepasst ist, um sein Abwasser zum Aufbereitungstank auszulassen.

3. Abwasseraufbereitungssystem gemäß Anspruch 2, wobei der Aufbereitungstank aus Folgendem besteht:
einem Lüftungstank (34) zur Aufbereitung der flüssigen Bestandteile, die vom fest-flüssigen Abscheider weggeleitet werden;
einem Fällungstank (35) zur Fällung von Schlammablagerungen, die in dem vom Lüftungstank ausgelassenen Wasser enthalten sind; und
einem Mittel (37) zum Zurückführen der Schlammablagerungen, die in dem Fällungstank getrennt werden, zum Ausgleichstank für zerkleinerten Müllfluss, wobei
der Küchenabwasserausgleichstank angepasst ist, um sein Abwasser zum Lüftungstank abzulassen.

4. Abwasseraufbereitungssystem gemäß einem der Ansprüche 1 bis 3, wobei der Küchenabwasserausgleichstank mit einem Wasserstandsensor (4b, 4c) versehen ist, der angepasst ist, um den Wasserstand in dem Tank zu erfassen, bevor das Abwasser von dem Tank überläuft.

5. Abwasseraufbereitungssystem gemäß Anspruch 4, wobei der Fällungstank angepasst ist, um einen Schwerkraftfluss des aufbereiteten Abwassers vom Lüftungstank (34) aufzunehmen und seine überstehende Flüssigkeit durch Schwerkraft zu einem Abwasserentsorgungssystem auszulassen, wobei der Fällungstank angepasst ist, um einen koagulierenden Wirkstoff, der von einer koagulierenden Wirkstoffversorgung abgelagert wird, einzulassen, und der ein Rührmittel (35c) zum Rühren der überstehenden Flüssigkeit aufweist, und wobei sie ihre überstehende Flüssigkeit durch Schwerkraft auslässt, und wobei das Steuermittel angepasst ist, um das Rührmittel nach dem Messen des Küchenabwassers, das vom Küchenabwasserausgleichstank überfließt, anzuhalten.

6. Abwasseraufbereitungssystem gemäß Anspruch 4 oder 5, wobei das Steuermittel angepasst ist, um einen Alarm auszulösen und die Verwendung von Wasser in der Küchenspüle zu beschränken, wenn der Wasserstandsensor den Überfluss des Abwassers vom Küchenabwasserausgleichstank misst.

7. Abwasseraufbereitungssystem gemäß einem der Ansprüche 4 bis 6, ferner bestehend aus einem Ventil, das in einem an den Küchenwasserhahn angeschlossenen Wasserversorgungsrohr, bereitgestellt ist, wobei das Ventil durch den Wasserstandsensor gesteuert wird, um den Wasserfluss durch den Wasserhahn zu beschränken, wenn der Sensor den Überflussstand im Küchenabwasserausgleichstank misst.

8. Abwasseraufbereitungssystem gemäß einem der Ansprüche 4 bis 7, wobei der Überflussauslass des Küchenabwasserausgleichstanks einen ausreichend großen Querschnitt aufweist, um den maximalen Abwasserfluss, der von der Spüle abgelassen wird, zu ermöglichen.

9. Abwasseraufbereitungssystem gemäß einem der Ansprüche 4 bis 8, wobei das Steuermittel angepasst ist, um den Abwasserfluss vom Küchenabwasserausgleichstank zum Abwasseraufbereitungsabschnitt zu erhöhen, wenn der Abwasserstandsensor misst, dass sich der Wasserstand im Küchenabwasserausgleichstank dem Überflussstand nähert.

10. Abwasseraufbereitungssystem gemäß einem der Ansprüche 3 bis 9, wobei eine Mammutpumpe (6a) mittels welche das Abwasser in dem Küchenabwasserausgleichstank zum Lüftungstank transportiert wird, bereitgestellt ist, während die Schlammablagerungen, die in dem Fällungstank getrennt werden, von dort zum Ausgleichstank für zerkleinerten Müllfluss durch ein Schlammablagerungenrückführungsrohr zurückgeführt werden und wobei die Druckluftleitung der Mammutpumpe unter dem Schlammablagerungenrückführungsrohr (37), wenn es das Schlammablagerungenrückführungsrohr kreuzt, verläuft.

11. Abwasseraufbereitungssystem gemäß einem der Ansprüche 3 bis 10, wobei der Lüftungstank mit einem Luftverteiler (34c) zum Erzeugen eines Strömens des Wassers im Tank und einem Baffle versehen ist.

12. Abwasseraufbereitungssystem gemäß einem der Ansprüche 3 bis 11, ferner bestehend aus einer Trennwand (34e) in dem Lüftungstank und zwischen dem Überflusseinlass zum Aufnehmen von Abwasser vom Küchenabwasserausgleichstank und dem Überflussauslass zum Fällungstank, so dass das Abwasser unter der Trennwand durchfließen kann.

## Revendications

1. Un système de traitement d'eaux usées pour traiter des eaux usées de cuisine comprenant :
un dispositif d'évacuation (2) ;
une section de traitement d'eaux usées (3) pour traiter les eaux usées déversées dudit dispositif d'évacuation ;
un réservoir de régulation (4) pour rassembler lesdites eaux usées de cuisine (ci-après appelé "réservoir de régulation des eaux usées de cuisine") déversées pendant que ledit dispositif d'évacuation n'est pas utilisé ;
un commutateur de canalisation (5), lequel est adapté pour canaliser les eaux usées déversées dudit dispositif d'évacuation vers ladite section de traitement d'eaux usées lorsque ledit dispositif d'évacuation est utilisé et pour canaliser les eaux usées de cuisine vers ledit réservoir de régulation des eaux usées de cuisine lorsque ledit dispositif d'évacuation n'est pas utilisé ;
un moyen de transfert (6) pour transférer les eaux usées accumulées dans ledit réservoir de régulation des eaux usées de cuisine vers ladite section de traitement d'eaux usées à un débit constant ;
un moyen de commande (7) pour commander ledit dispositif d'évacuation, ladite section de traitement d'eaux usées, ledit réservoir de régulation des eaux usées de cuisine, ledit commutateur de canalisation et ledit moyen de transfert ; et
un passage pour vider les eaux usées débordant dudit réservoir de régulation des eaux usées de cuisine vers ladite section de traitement d'eaux usées.

2. Le système de traitement d'eaux usées selon la revendication 1, dans lequel ladite section de traitement d'eaux usées comprend :
un réservoir de régulation d'écoulement de déchets broyés (31) pour rassembler les eaux usées qui contiennent des déchets broyés générés dans ledit dispositif d'évacuation ;
un séparateur solide-liquide (33) pour séparer un mélange solide-liquide rassemblé dans ledit réservoir de régulation d'écoulement de déchets broyés en composants solides et en composants liquides ; et
un réservoir de traitement pour traiter lesdits composants liquides provenant dudit séparateur solide-liquide, dans lequel
ledit réservoir de régulation des eaux usées de cuisine est adapté pour déverser ses eaux usées vers ledit réservoir de traitement

3. Le système de traitement d'eaux usées selon la revendication 2, dans lequel ledit réservoir de traitement comprend :
un réservoir d'aération (34) pour traiter lesdits composants liquides provenant dudit séparateur solide-liquide ;
un réservoir de précipitation (35) pour précipiter des boues contenues dans lesdites eaux déversées dudit réservoir d'aération ; et
un moyen pour renvoyer les boues (37) séparées dans ledit réservoir de précipitation audit réservoir de régulation d'écoulement de déchets broyés, dans lequel
ledit réservoir de régulation des eaux usées de cuisine est adapté pour vider ses eaux usées vers ledit réservoir d'aération.

4. Le système de traitement d'eaux usées selon n'importe laquelle des revendications 1 à 3, dans lequel ledit réservoir de régulation des eaux usées de cuisine est muni d'un détecteur de niveau d'eau (4b, 4c) adapté pour déceler le niveau d'eau dans ledit réservoir avant que les eaux usées ne débordent dudit réservoir.

5. Le système de traitement d'eaux usées selon la revendication 4, dans lequel ledit réservoir de précipitation est adapté pour recevoir un écoulement gravitaire des eaux usées traitées provenant dudit réservoir d'aération (34) et pour déverser ses surnageants par gravité vers un système d'égout, ledit réservoir de précipitation étant adapté pour accueillir un agent coagulant déposé d'une réserve d'agent coagulant, possédant un moyen d'agitation (35c) pour agiter ledit surnageant et déversant son surnageant par gravité, et dans lequel ledit moyen de commande est adapté pour arrêter ledit moyen d'agitation dès qu'il détecte que les eaux usées de cuisine débordent dudit réservoir de régulation des eaux usées de cuisine.

6. Le système de traitement d'eaux usées selon la revendication 4 ou la revendication 5, dans lequel ledit moyen de commande est adapté pour émettre un avertissement et pour limiter l'utilisation d'eau dans l'évier de cuisine lorsque ledit détecteur de niveau d'eau détecte le trop-plein des eaux usées provenant dudit réservoir de régulation des eaux usées de cuisine.

7. Le système de traitement d'eaux usées selon n'importe laquelle des revendications 4 à 6, comprenant de plus une vanne prévue dans un tuyau d'alimentation d'eau raccordé au robinet de cuisine, ladite vanne étant commandée par ledit détecteur de niveau d'eau pour limiter l'écoulement d'eau par ledit robinet lorsque ledit détecteur détecte le niveau de trop-plein dans ledit réservoir de régulation des eaux usées de cuisine.

8. Le système de traitement d'eaux usées selon n'importe laquelle des revendications 4 à 7, dans lequel la sortie de trop-plein dudit réservoir de régulation des eaux usées de cuisine possède une coupe transversale suffisante pour permettre l'écoulement maximum d'eaux usées vidées de l'évier.

9. Le système de traitement d'eaux usées selon n'importe laquelle des revendications 4 à 8, dans lequel ledit moyen de commande est adapté pour augmenter l'écoulement d'eaux usées dudit réservoir de régulation des eaux usées de cuisine vers ladite section de traitement d'eaux usées lorsque ledit détecteur de niveau d'eau détecte que le niveau d'eau dans ledit réservoir de régulation des eaux usées de cuisine approche dudit niveau de trop-plein.

10. Le système de traitement d'eaux usées selon n'importe laquelle des revendications 3 à 9, dans lequel une pompe à injection d'air sous pression (6a) est prévue au moyen de laquelle les eaux usées dans ledit réservoir de régulation des eaux usées de cuisine sont transportées vers ledit réservoir d'aération pendant que les boues séparées dans ledit réservoir de précipitation en reviennent pour se diriger vers le réservoir de régulation d'écoulement de déchets broyés par un tuyau de retour de boues, et dans lequel le tuyau d'injection d'air sous pression de ladite pompe à injection d'air sous pression passe sous ledit tuyau de retour de boues (37) lorsqu'il croise ledit tuyau de retour de boues.

11. Le système de traitement d'eaux usées selon n'importe laquelle des revendications 3 à 10, dans lequel ledit réservoir d'aération est muni d'un diffuseur d'air (34c) pour générer un courant de l'eau dans ledit réservoir et d'une chicane.

12. Le système de traitement d'eaux usées selon n'importe laquelle des revendications 3 à 11, comprenant de plus une cloison (34e) dans ledit réservoir d'aération et entre l'entrée de trop-plein destinée à recevoir des eaux usées provenant dudit réservoir de régulation des eaux usées de cuisine et la sortie de trop-plein vers ledit réservoir de précipitation de telle sorte que les eaux usées puissent passer sous ladite cloison.
